# EUROPEAN PATENT SPECIFICATION

(11) **EP 2 085 976 B1**
(45) Date of publication and mention of the grant of the patent: **25.07.2012**
(21) Application number: 09250174.1
(22) Date of filing: 22.01.2009
(51) Int. Cl.: H01B 1/04, B82B 3/00

(54) **Carbon nanotube composite material and method for making the same**
Kohlenstoffnanoröhrchenverbundmaterial und Verfahren zu dessen Herstellung
Matériau composite de nanotubes de carbone et son procédé de production

(30) Priority: 01.02.2008 CN 200810066040; 01.02.2008 CN 200810066045; 01.02.2008 CN 200810066039; 01.02.2008 CN 200810066043
(43) Date of publication of application: 05.08.2009
(73) Proprietor: Tsing Hua University, Haidian District Beijing City (CN); Hon Hai Precision Industry Co., Ltd., Tu-cheng City, Taipei Hsien (TW)
(72) Inventor: Liu, Kai, Beijing City (CN); Jiang, Kai-Li, Beijing City (CN); Liu, Liang, Beijing City (CN); Fan, Shou-Shan, Beijing City (CN); Zhao, Qing-Yu, Beijing City (CN); Zhai, Yong-Chao, Beijing City (CN)
(74) Representative: Stuttard, Garry Philip

(56) References cited:
- WO-A-2006/026539
- DAI ET AL.: "Metal coating on suspended carbon nanotubes and its implication to metal-tube interaction" CHEMICAL PHYSICS LETTERS, vol. 331, 24 November 2000 (2000-11-24), pages 35-41, XP002530276
- HAN ET AL.: "Electronic structure tailoring and selective adsorption mechanism of metal-coated nanotubes" NANOLETTERS, vol. 8, no. a, 18 December 2007 (2007-12-18), pages 81-86, XP002530277
- MEI ZHANG ET AL: "Strong, Transparent, Multifunctional, Carbon Nanotube Sheets" SCIENCE, AMERICAN ASSOCIATION FOR THE ADVANCEMENT OF SCIENCE, US, WASHINGTON, DC, vol. 309, 19 August 2005 (2005-08-19), pages 1215-1219, XP002520232 ISSN: 0036-8075

## Description

The present invention relates to composite materials and methods for making the same, more particularly, to a carbon nanotube composite material and a method for making the same.

Carbon nanotubes (CNTs) are a novel carbonaceous material and have received a great deal of interest since the early 1990s. The carbon nanotubes have interesting and potentially useful heat conducting, electrical conducting, and mechanical properties. The carbon nanotubes can be dispersed in a matrix for forming a composite material. Then, the composite material can be screen-printed or chemical liquor deposited on a substrate for forming a carbon nanotube composite material. Thus, the carbon nanotube composite material may have properties of both carbon nanotubes and matrix material.

However, the above-mentioned methods for making the carbon nanotube composite material have many disadvantages. Firstly, the methods are relatively complex and costly. Secondly, the carbon nanotubes are prone to aggregate in the composite material. Thus, the strength and toughness of the composite material may be relatively decreased. Thirdly, the carbon nanotubes in the composite material are disorganized and not dispersed in any particular direction. Thus, the excellent heat and electrical conductivity cannot be satisfyingly achieved.

What is needed, therefore, is a carbon nanotube composite material and a method for making the same in which the above problems are eliminated or at least alleviated.

Viewed from a first aspect the present invention provides a carbon nanotube composite material comprising:
a plurality of carbon nanotubes being joined end-to end in parallel with each other by van der Waals attractive forces; and
at least one conductive coating layer disposed about the carbon nanotubes.

Viewed from a further aspect the present invention provides a carbon nanotube composite material comprising:
a carbon nanotube film structure comprising a plurality of carbon nanotubes being joined end-to end in parallel with each other by van der Waals attractive forces and parallel to a surface of the carbon nanotube film; and
at least one conductive coating layer disposed about the carbon nanotube.

Viewed from a yet further aspect the present invention provides a method for making a carbon nanotube composite material, the method comprising the steps of
(a) providing a carbon nanotube film having a plurality of carbon nanotubes joined end-to-end and being parallel with each other, the carbon nanotube film being formed by the following substeps:
   providing a carbon nanotube array;
   selecting a plurality of carbon nanotube segments having a predetermined width from the carbon nanotube array
   pulling the carbon nanotube segments at an even/uniform speed to achieve a uniform carbon nanotube film, and
(b) forming at least one conductive coating layer on a plurality of the carbon nanotubes in the carbon nanotube film by a vacuum evaporation deposition method, the vacuum evaporation deposition method comprises the following substeps:
   providing two vaporizing sources separately disposed on opposite side of the carbon nanotube film;
   heating the two vaporizing sources to deposit a conductive coating layer on two opposite surfaces of the carbon nanotube film,
   wherein the conductive coating layer comprises a conductive layer.

Many aspects of the present carbon nanotube composite material and method for making the same can be better understood with references to the following drawings. The components in the drawings are not necessarily drawn to scale, the emphasis instead being placed upon clearly illustrating the principles of the present carbon nanotube composite material and method for making the same.

FIG. 1 shows a Scanning Electron Microscope (SEM) image of a carbon nanotube composite material according to the present embodiment.

FIG. 2 shows a Transmission Electron Microscope (TEM) image of a carbon nanotube composite material according to another embodiment.

FIG. 3 is a schematic, cross-sectional view of a single carbon nanotube in the carbon nanotube composite material.

FIG. 4 is a flow chart of a method for making the carbon nanotube composite material of FIG. 1.

FIG 5 is a system for making the carbon nanotube composite material of FIG 1.

Corresponding reference characters indicate corresponding parts throughout the several views. The exemplifications set out herein illustrate at least one embodiment of the present carbon nanotube composite material and method for making the same, in at least one form.

References will now be made to the drawings to describe, in detail, embodiments of the present carbon nanotube composite material and method for making the same.

A carbon nanotube composite material includes a carbon nanotube structure and at least one conductive coating layer. The carbon nanotube structure includes a plurality of successively oriented carbon nanotubes joined end-to-end by van der Waals attractive force. The carbon nanotubes in the carbon nanotube structure have a substantially equal length and are parallel to each other to form a carbon nanotube segment. In the present embodiment, one layer of conductive coating layer disposed about the carbon nanotubes of the carbon nanotube structure. The conductive coating layer is in contact with the surfaces of the carbon nanotubes. Each carbon nanotube is surrounded by the conductive coating layer.

The carbon nanotube structure is a free-standing carbon nanotube structure. The "free-standing" means that the carbon nanotube structure does not have to be formed on a surface of a substrate to be supported by the substrate, but sustain the shape by itself due to the great van der Waals attractive force between the adjacent carbon nanotubes in the carbon nanotube composite material.

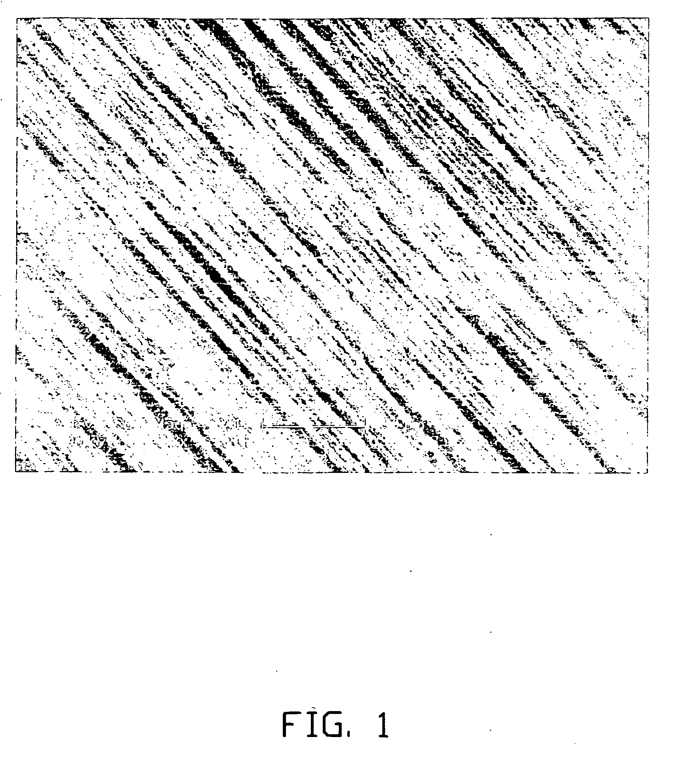

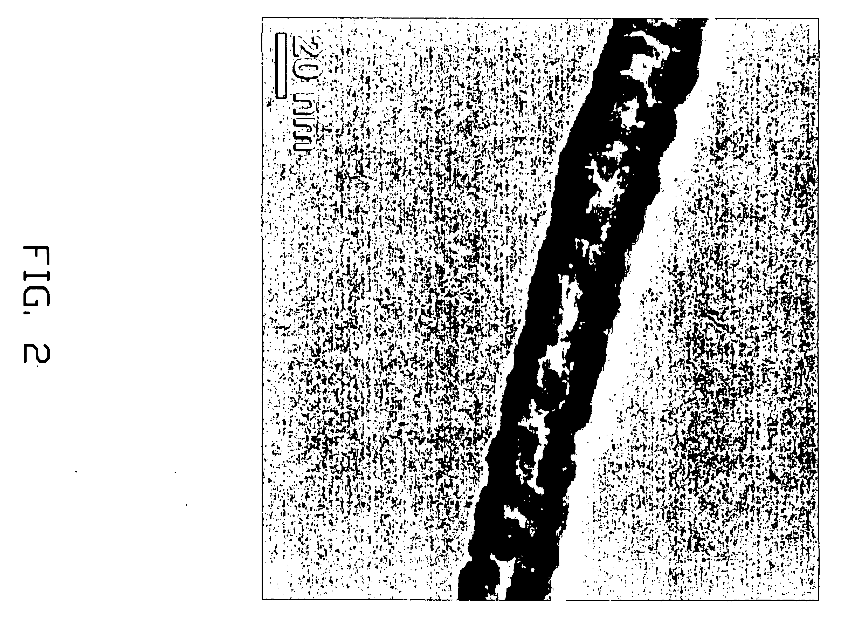

The carbon nanotube structure including the plurality of oriented carbon nanotubes can be a carbon nanotube film, e.g. the carbon nanotubes being formed in a film structure, or a carbon nanotube wire, e.g. the carbon nanotubes being formed in a wire-like structure. Referring to FIG 1, if the carbon nanotube structure is the carbon nanotube film, the carbon nanotubes of the carbon nanotube film are arranged in a same direction. The carbon nanotube film includes a plurality of carbon nanotubes parallel to a surface of the carbon nanotube film. The conductive coating layer covers the surface of the carbon nanotube film. Referring to FIG. 2, if the carbon nanotube structure is a carbon nanotube wire, the carbon nanotubes are aligned around the axis of the carbon nanotube wire.

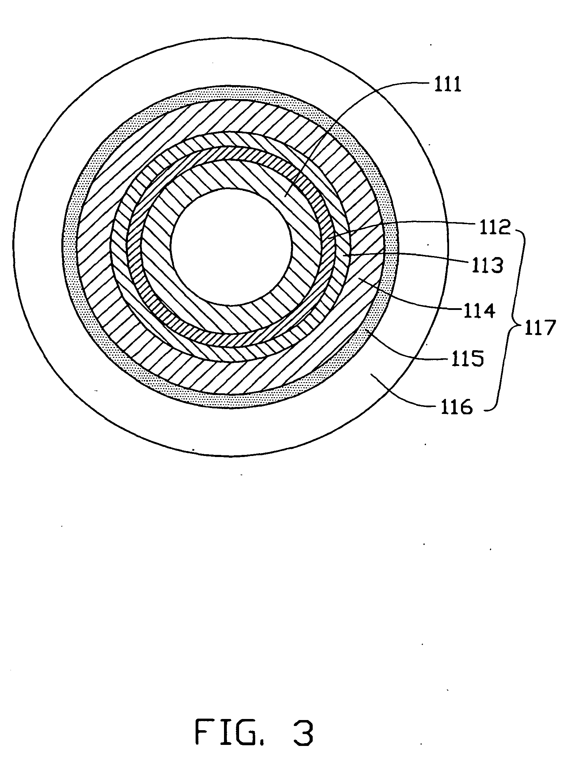

Referring to FIG 3, an individual carbon nanotube 111 is set only as an example to explain the carbon nanotube composite material of a plane structure or a wire-like structure. The carbon nanotube 111 in the carbon nanotube composite material is covered by the conductive coating layer 117 on the outer surface thereof. In the present embodiment, the conductive coating layer 117 is in direct contact with the outer surface of the individual carbon nanotube 111. More specifically, the conductive coating layer 117 can include a wetting layer 112, a transition layer 113, and an anti-oxidation layer 115. In addition, the conductive coating layer 117 has at least one conductive layer 114 positioned between the transition layer 113 and the anti-oxidation layer 115. In the present embodiment, the conductive coating layer 117 includes all of the aforementioned elements. The wetting layer 112 is the innermost layer of the conductive coating layer 117, covering and directly contacting with the outer surface of the carbon nanotube 111. The transition layer 113 enwraps the wetting layer 112. The conductive layer 114 enwraps the transition layer 113. The anti-oxidation layer 115 enwraps the conductive layer 114 in series.

Typically, the wetting layer 112 is configured for providing a good transition between the carbon nanotube 111 and the conductive layer 114. The material of the wetting layer 112 can be selected from a group consisting of iron (Fe), cobalt (Co), nickel (Ni), palladium (Pd), titanium (Ti), and alloys thereof. A thickness of the wetting layer 112 approximately ranges from 1 to 10 nanometers. In the present embodiment, the material of the wetting layer 112 is Ni and the thickness of the wetting layer 112 is 2 nanometers. It can be understood that the wetting layer 112 is optional when the wettability between the carbon nanotubes and the metal is good.

The transition layer 113 is arranged for combining the wetting layer 112 with the conductive layer 114. The material of the transition layer 113 can be selected from a group of copper (Cu), silver (Ag), and alloy thereof. A thickness of the transition layer 113 approximately ranges from 1 to 10 nanometers. In the present embodiment, the material of the transition layer 113 is Cu and the thickness of the transition layer 113 is 2 nanometers. As described above, it may be understood that the transition layer 113 is optional when the wetting layer 112 and the conductive layer 114 can combine with each other.

The conductive layer 114 is configured for enhancing the conductivity of the carbon nanotube composite material 100. The material of the conductive layer 114 can be selected from any suitable conductive material including Cu, Ag, gold (Au) and alloys thereof. A thickness of the conductive layer 114 approximately ranges from 1 to 20 nanometers. In the present embodiment, the material of the conductive layer 114 is Ag and has the thickness of 10 nanometers.

The anti-oxidation layer 115 is configured for preventing the conducting layer 114 from being oxidized when exposuring to the air, which may reducing the conductivity of the carbon nanotube composite material 100. The material of the anti-oxidation layer 115 can be any suitable material including Au, platinum (Pt), and any other anti-oxidation metallic materials or alloys thereof. A thickness of the anti-oxidation layer 115 ranges from 1 to 10 nanometers. In the present embodiment, the material of the anti-oxidation layer 115 is Pt and has the thickness of the anti-oxidation layer 115 is 2 nanometers. It also can be understood that the anti-oxidation layer 115 is optional when the conducting layer 114 is hard to be oxidized.

Furthermore, the coating layer 117 further includes a strengthening layer 116. The strengthening layer 116 can be applied to the outer surface of the conductive coating layer 117 for enhancing the strength of the carbon nanotube composite material. The material of the strengthening layer 116 can be any suitable material including a polymer with high strength, such as polyvinyl acetate (PVA), polyvinyl chloride (PVC), polyethylene (PE), or paraphenylene benzobisoxazole (PBO). A thickness of the strengthening layer 116 ranges from 0.1 micron to 1 micron. In the present embodiment, the strengthening layer 116 disposed on the outer surface of the anti-oxidation layer 115. The material of the strengthening layer 116 is PVA and the thickness of the strengthening layer is 0.5 microns. It also can be understood that the strengthening layer 116 is optional when the carbon nanotube composite material is strong enough.

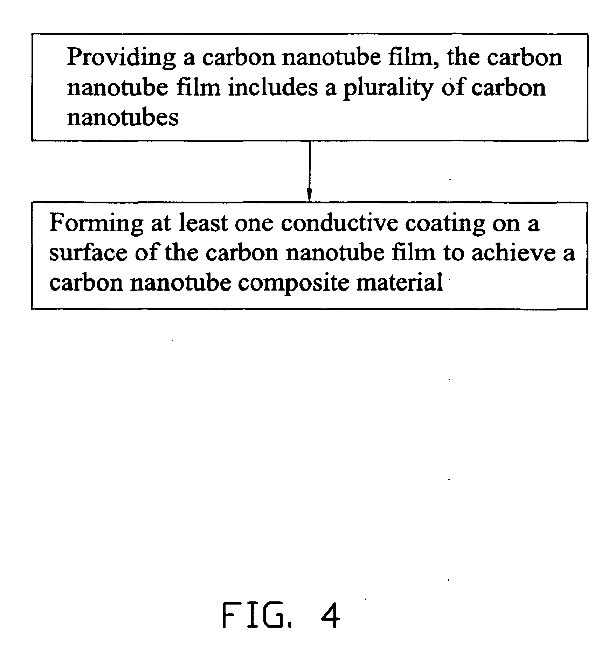

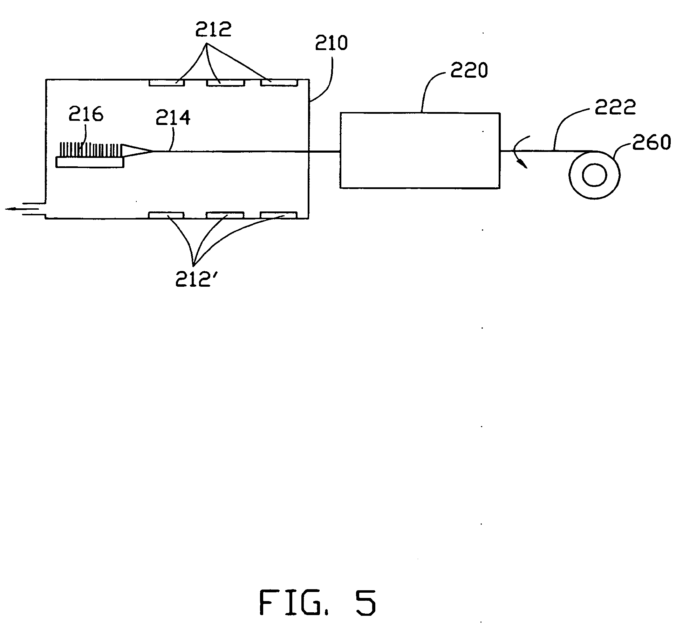

Referring to FIG. 4 and FIG. 5, a method for making the carbon nanotube composite material 222 is shown. In the present embodiment, a carbon nanotube film 214 is shown only as an example for explaining the method for making the carbon nanotube composite material 222. The method includes the following steps: (a) providing a carbon nanotube film 214 including a plurality of carbon nanotubes; and, (b) forming at least one conductive coating layer 117 on the carbon nanotube film 214 to obtain a carbon nanotube composite material 222.

In step (a), the carbon nanotube film includes a plurality of carbon nanotubes, and there are interspaces between adjacent two carbon nanotubes. Carbon nanotubes in the carbon nanotube film can parallel to a surface of the carbon nanotube film. A distance between adjacent two carbon nanotubes can be larger than a diameter of the carbon nanotubes. The carbon nanotube film can have a free-standing structure. The carbon nanotube film can be formed by the following substeps: (al) providing a carbon nanotube array 216 (e.g. a super-aligned carbon nanotube array); (a2) pulling out a carbon nanotube film 214 from the carbon nanotube array 216 by using a tool (e.g., adhesive tape, pliers, tweezers, or another tool allowing multiple carbon nanotubes to be gripped and pulled simultaneously).

In step (a1), a super-aligned carbon nanotube array 216 can be provided and formed by the following substeps: (a11) providing a substantially flat and smooth substrate; (a12) forming a catalyst layer on the substrate; (a13) annealing the substrate with the catalyst layer in air at a temperature ranging from 700°C to 900°C for 30 to 90 minutes; (a14) heating the substrate with the catalyst layer to a temperature ranging from 500°C to 740°C in a furnace with a protective gas in the furnace; and (a15) supplying a carbon source gas to the furnace for 5 to 30 minutes and growing the super-aligned carbon nanotube array 216 on the substrate.

In step (a11), the substrate can be a P-type silicon wafer, an N-type silicon wafer, or a silicon wafer with a film of silicon dioxide thereon. In the present embodiment, a 4-inch P-type silicon wafer is used as the substrate.

In step (a12), the catalyst can be made of iron (Fe), cobalt (Co), nickel (Ni), or any alloy comprising of iron (Fe), cobalt (Co), and nickel (Ni).

In step (a14), the protective gas can be made up of at least one of nitrogen (N₂), ammonia (NH₃), and a noble gas. In step (a5), the carbon source gas can be a hydrocarbon gas, such as ethylene (C₂H₄), methane (CH₄), acetylene (C₂H₂), ethane (C₂H₆), or any combination thereof.

The super-aligned carbon nanotube array 216 can be approximately 200 to 400 microns in height and include a plurality of carbon nanotubes parallel to each other and approximately perpendicular to the substrate. The carbon nanotubes in the carbon nanotube array 216 can be single-walled carbon nanotubes, double-walled carbon nanotubes, or multi-walled carbon nanotubes. Diameters of the single-walled carbon nanotubes range from 0.5 nanometers to 10 nanometers. Diameters of the double-walled carbon nanotubes range from I nanometer to 50 nanometers. Diameters of the multi-walled carbon nanotubes range from 1.5 nanometers to 50 nanometers.

The super-aligned carbon nanotube array 216 formed under the above conditions is essentially free of impurities such as carbonaceous or residual catalyst particles. The carbon nanotubes in the super-aligned carbon nanotube array 216 are closely packed together by van der Waals attractive force.

In step (a2), the carbon nanotube film 214 can be formed by the following substeps: (a21) selecting a plurality of carbon nanotube segments having a predetermined width from the carbon nanotube array 216; and (a22)pulling the carbon nanotube segments at an even/uniform speed to achieve a uniform carbon nanotube film 214.

In step (a21), the carbon nanotube segments having a predetermined width can be selected by using a tool, such as an adhesive tape, to contact the carbon nanotube array 216. Each carbon nanotube segment includes a plurality of carbon nanotubes parallel to each other. In step (a22), the pulling direction is arbitrary (e.g., substantially perpendicular to the growing direction of the carbon nanotube array 216).

More specifically, during step (a22), because the initial carbon nanotube segments are drawn out, other carbon nanotube segments are also drawn out end-to-end due to the van der Waals attractive force between ends of adjacent segments. This process of drawing ensures that a continuous, uniform carbon nanotube film 214 having a predetermined width can be formed. The carbon nanotube film 214 includes a plurality of carbon nanotubes joined end-to-end. The carbon nanotubes in the carbon nanotube film 214 are all substantially parallel to the pulling/drawing direction of the carbon nanotube film 214, and the carbon nanotube film 214 produced in such manner can be selectively formed to have a predetermined width. The carbon nanotube film 214 formed by the pulling/drawing method has superior uniformity of thickness and conductivity over a typically disordered carbon nanotube film 214. Furthermore, the pulling/drawing method is simple, fast, and suitable for industrial applications.

The length and width of the carbon nanotube film 214 depends on a size of the carbon nanotube array 216. When the substrate is a 4-inch P-type silicon wafer, as in the present embodiment, the width of the carbon nanotube film 214 ranges from 0.5 nanometers to 10 centimeters, and the thickness of the carbon nanotube film 214 ranges from 0.5 nanometers to 100 microns.

In step (b), the at least one conductive coating layer can be formed on the carbon nanotubes in carbon nanotube film 214 by a physical vapor deposition (PVD) method such as a vacuum evaporation or a sputtering. In the present embodiment, the at least one conductive coating layer is formed by a vacuum evaporation method.

The vacuum evaporation method for forming the at least one conductive coating layer of step (b) can further include the following substeps: (b1) providing a vacuum container 210 including at least one vaporizing source 212; and (b2) heating the at least one vaporizing source 212 to deposit a conductive coating layer on two opposite surfaces of the carbon nanotube film 214.

The vacuum container 210 includes a depositing zone therein. In the present embodiment, three pairs of vaporizing sources are respectively mounted on top and bottom portions of the depositing zone. Each pair of vaporizing sources 212/212' includes an upper vaporizing source 212 located on a top surface of the depositing zone, and a lower vaporizing source 212' located on a bottom surface of the depositing zone. The two vaporizing sources 212/212'are on opposite sides of the vacuum container 210. Each pair of vaporizing sources 212/212' is made of a type of metallic material. To vary the materials in different pairs of vaporizing sources 212/212', the wetting layer 112, the transition layer 113, the conductive layer 114, and the anti-oxidation layer 115 can be orderly formed on the carbon nanotube film 214. The vaporizing sources can be arranged along a pulling direction of the carbon nanotube film 214 on the top and bottom portions of the depositing zone. The carbon nanotube film 214 is located in the vacuum container 210 and between the upper vaporizing source 212 and the lower vaporizing source 212'. There is a distance between the carbon nanotube film 214 and the vaporizing sources 212/212'. An upper surface of the carbon nanotube film 214 directly faces the upper vaporizing sources 212. A lower surface of the carbon nanotube film 214 directly faces the lower vaporizing sources 212'. The vacuum container 210 can be vacuum-exhausted by using of a vacuum pump (not shown).

In step (b2), the vaporizing source 212 can be heated by a heating device (not shown). The material in the vaporizing source 212 is vaporized or sublimed to form a gas. The gas meets the cold carbon nanotubes of the carbon nanotube film 214 and coagulates on the upper surface and the lower surface of the carbon nanotube film 214. Because a plurality of interspaces exists between adjacent carbon nanotubes of the carbon nanotube film 214 and the carbon nanotube film 214 is relatively thin, the conductive material can be infiltrated in the interspaces of the carbon nanotube film 214. As such, the conductive material can be deposited on the outer surface of most, if not all, of the single carbon nanotube.

Each vaporizing source 212 can have a corresponding depositing zone by adjusting the distance between the carbon nanotube film 214 and the vaporizing sources 212. The vaporizing sources 212 can be heated simultaneously, while the carbon nanotube film 214 is pulled through the multiple depositing zones between the vaporizing sources 212 to form multiple conductive coating layers.

To increase density of the gas in the depositing zone, and prevent oxidation of the conductive material, the vacuum degree in the vacuum container 210 is above I Pascal (Pa). In the present embodiment, the vacuum degree is 4×10⁻⁴ Pa.

It is to be understood that the carbon nanotube array 216 formed in step (a1) can be directly placed in the vacuum container 210. The carbon nanotube film 214 can be pulled in the vacuum container 210 and successively passed each vaporizing source 212, with each conductive coating layer successively depositing thereon. Thus, the pulling step and the depositing step can be performed simultaneously.

In the present embodiment, the method for forming the at least one conductive coating layer includes the following steps: forming a wetting layer on a surface of the carbon nanotube film 214; forming a transition layer on the wetting layer; forming a conductive layer on the transition layer; and forming an anti-oxidation layer on the conductive layer. In the above-described method, the steps of forming the wetting layer, the transition layer, and the anti-oxidation layer are optional.

The method of making the carbon nanotube composite material can optionally further includes a step of forming a strengthening layer outside the at least one conductive coating layer. More specifically, the carbon nanotube film 214 with the at least one conductive coating layer can be immersed in a container 220 including a liquid polymer. Thus, the entire surface and spaces between the carbon nanotubes of the carbon nanotube film 214 can be soaked in the liquid polymer. After concentration (i.e., being cured), a strengthening layer can be formed on the outside surface of each coated carbon nanotube. It is easy to be understood the carbon nanotube composite material 222 manufactured by this method has a plane structure.

Further, the steps of forming the carbon nanotube film 214, the at least one conductive coating layer, and the strengthening layer can be processed in the same vacuum container to achieve a successive production of the carbon nanotube composite material 222.

Optionally, to increase the transparency of the carbon nanotube film 214, before step (c), the carbon nanotube film 214 can be treated by a laser to decrease the thickness of the carbon nanotube film 214.

In the present embodiment, the frequency of the laser is 1064 nanometers, the output power of the laser is 20 mW, the scanning rate of the laser is 10 mm/s. A focus lens of a laser device is removed, and a diameter of a bright spot formed by the irradiation of the laser on the surface of the carbon nanotube film is 3 millimeters.

Laser treated and untreated carbon nanotube composite material 222 and carbon nanotube film 214 with different conductive coating layers, the corresponding resistances, and the transmittances of a visible light with a frequency of 550 nanometers are compared in the table 1.

**Table 1**

| No. | Treated or untreated with laser | Wetting layer/Thickness | Conductive layer/ Thickness | Ohms per square (Ω) | Transmittance(%) |
|---|---|---|---|---|---|
| 1 | untreated | -- | -- | 1684 | 85.2 |
| 2 | untreated | Ni/2nm | -- | 1656 | 79.0 |
| 3 | untreated | Ni/2nm | Au/3nm | 504 | 74.6 |
| 5 | untreated | Ni/2nm | Au/5nm | 216 | 72.5 |
| 6 | treated | Ni/2nm | Au/5nm | 2127 | 92.8 |
| 7 | treated | Ni/2nm | Au/10nm | 1173 | 92.7 |
| 8 | treated | Ni/2nm | Au/15nm | 495 | 90.7 |
| 9 | treated | Ni/2nm | Au/20nm | 208 | 89.7 |

As shown in table 1, due to the conductive coating layer outside the carbon nanotubes in the carbon nanotube composite film 214, the resistance of the carbon nanotube composite material 222 is lower than the carbon nanotube film 214. However, the transmittance and transparency of the carbon nanotube composite material 222 is decreased as the thickness of the conductive coating layer increased. After treated with laser, the transmittance and transparency of the carbon nanotube composite material 222 is increased. To conclude from a large amount of testings, the resistance of the carbon nanotube composite material 222 can be decreased to 50 Ω, the transmittance of visible light can be increased to 95%.

In the present embodiment, the resistance of the carbon nanotube film 214 is above 1600 ohms. After depositing a Ni layer and an Au layer, the resistance of the carbon nanotube composite material 222 can reduce to 200 ohms. The transmitting ratio of visible light ranges ranges from 70% to 95%. Thus, the carbon nanotube composite material 222 in the present embodiment has a low resistance and a high transparency, and can be used as a transparent conductive film.

Further, in order to get a carbon nanotube composite material having wire-like structure, an additional step (c) of treating the carbon nanotube composite material in plane structure can be further processed. In step (c), the carbon nanotube composite material in plane structure can be treated with mechanical force (e.g., a conventional spinning process) to acquire a wire-like structure. The carbon nanotube composite material in plane structure can be twisted along an aligned direction of the carbon nanotubes therein to acquire an individually coated and twisted wire-like structure.

In the present embodiment, step (c) can be executed by two methods. The first method includes the following steps of: adhering one end of the individually coated carbon nanotube film 214 to a rotating motor; and twisting the individually coated carbon nanotube film 214 by the rotating motor. The second method includes the following steps of: supplying a spinning axis; contacting the spinning axis to one end of the individually coated carbon nanotube film 214; and twisting the individually coated carbon nanotube film 214 by the spinning axis.

The carbon nanotube composite material 222 provided in the present embodiment has the following superior properties: the outer surface of each carbon nanotube is covered by at least one conductive coating layer. Thus, the coated carbon nanotube composite material 222 has high conductivity. Thirdly, the method for forming the coated carbon nanotube composite material 222 is simple and relatively inexpensive. Additionally, the carbon nanotube composite material 222 can be formed successively and, thus, a mass production of the carbon nanotube composite material 222 can be achieved. Finally, since the carbon nanotubes are hollow, and a thickness of the at least one conductive coating layer is just several nanometers, thus a skin effect is less likely to occur in the carbon nanotube composite material 222, and signals will not decay as much during transmission.

## Claims

1. A carbon nanotube composite material comprising:
a plurality of carbon nanotubes being joined end-to end in parallel with each other by van der Waals attractive forces; and
at least one conductive coating layer disposed about the carbon nanotubes.

2. A carbon nanotube composite material as claimed in claim 1, wherein the conductive coating layer is in contact with surfaces of the carbon nanotubes.

3. A carbon nanotube composite material as claimed in claim 1 or 2, wherein the conductive coating layer comprises a conductive layer and the material of the conductive layer is comprised of a material selected from the group consisting of copper, silver, gold and alloys thereof.

4. A carbon nanotube composite material as claimed in claim 3, wherein a thickness of the conductive layer ranges from 1 nm to 20 nm.

5. A carbon nanotube composite material as claimed in any of claims 1 to 4, wherein the conductive coating layer further comprises a wetting layer located between outside surface of each carbon nanotube and the conductive layer.

6. A carbon nanotube composite material as claimed in claim 5, wherein the material of the wetting layer is selected from the group consisting of iron, cobalt, nickel, palladium, titanium, and alloys thereof and a thickness of the wetting layer ranges from 1 nm to 20 nm.

7. A carbon nanotube composite material comprising:
a carbon nanotube film structure comprising a plurality of carbon nanotubes being joined end-to end in parallel with each other by van der Waals attractive forces and parallel to a surface of the carbon nanotube film; and
at least one conductive coating layer disposed about the carbon nanotube.

8. A carbon nanotube composite material as claimed in claim 7, wherein the carbon nanotube film structure is a free-standing structure.

9. A carbon nanotube composite material as claimed in claim 7 or 8, wherein the carbon nanotube film structure comprises a carbon nanotube film comprising a plurality
of interspaces between adjacent two carbon nanotubes.

10. A method for making a carbon nanotube composite material, the method comprising the steps of:
(a) providing a carbon nanotube film having a plurality of carbon nanotubes joined end-to-end and being parallel with each other, the carbon nanotube film being formed by the following substeps:
providing a carbon nanotube array;
selecting a plurality of carbon nanotube segments having a predetermined width from the carbon nanotube array
pulling the carbon nanotube segments at an even/uniform speed to achieve a uniform carbon nanotube film, and
(b) forming at least one conductive coating layer on a plurality of the carbon nanotubes in the carbon nanotube film by a vacuum evaporation deposition method, the vacuum evaporation deposition method comprises the following substeps:
providing two vaporizing sources separately disposed on opposite side of the carbon nanotube film;heating the two vaporizing sources to deposit a conductive coating layer on two opposite surfaces of the carbon nanotube film,
wherein the conductive coating layer comprises a conductive layer.

11. A method as claimed in claim 10, wherein the carbon nanotube film is treated by a laser to decrease the thickness of the carbon nanotube film before step (b).

12. A method as claimed in claim 10 or 11, further comprising a step of twisting the carbon nanotube film after step (b).

13. A method as claimed in any of claims 10 to 12, wherein the carbon nanotube film is twisted along an aligned direction of the carbon nanotubes therein.

## Patentansprüche

1. Kohlenstoffnanoröhrchenverbundmaterial umfassend:
mehrere Kohlenstoffnanoröhrchen, welche durchgehend parallel zueinander durch van der Waals-Anziehungskräfte verbunden sind; und
mindestens eine leitende Beschichtung, welche um die Kohlenstoffnanoröhrchen angeordnet ist.

2. Kohlenstoffnanoröhrchenverbundmaterial nach Anspruch 1, wobei die leitende Beschichtung in Kontakt mit Flächen der Kohlenstoffnanoröhrchen ist.

3. Kohlenstoffnanoröhrchenverbundmaterial nach Anspruch 1 oder 2, wobei die leitende Beschichtung eine leitende Schicht umfasst und das Material der leitenden Schicht ein Material enthält, welches aus der Gruppe bestehend aus Kupfer, Silber, Gold und Legierungen daraus ausgewählt ist.

4. Kohlenstoffnanoröhrchenverbundmaterial nach Anspruch 3, wobei eine Dicke der leitenden Schicht von 1 nm bis 20 nm reicht.

5. Kohlenstoffnanoröhrchenverbundmaterial nach einem der Ansprüche 1-4, wobei die leitende Beschichtung ferner eine Benetzungsschicht umfasst, welche zwischen einer Außenseitenfläche eines jeden Kohlenstoffnanoröhrchens und der leitenden Schicht angeordnet ist.

6. Kohlenstoffnanoröhrchenverbundmaterial nach Anspruch 5, wobei das Material der Benetzungsschicht ausgewählt ist aus der Gruppe bestehend aus Eisen, Kobalt, Nickel, Palladium, Titan und Legierungen daraus und eine Dicke der Benetzungsschicht von 1 nm bis 20 nm reicht.

7. Kohlenstoffnanoröhrchenverbundmaterial umfassend:
eine Kohlenstoffnanoröhrchenfilmstruktur umfassend mehrer Kohlenstoffnanoröhrchen, welche durchgehend parallel zueinander durch van der Waals-Anziehungskräfte verbunden sind und parallel zu einer Fläche des Kohlenstoffnanoröhrchenfilms sind; und
mindestens eine leitende Beschichtung, welche um die Kohlenstoffnanoröhrchen angeordnet ist.

8. Kohlenstoffnanoröhrchenverbundmaterial nach Anspruch 7, wobei die Kohlenstoffnanoröhrchenfilmstruktur eine freistehende Struktur ist.

9. Kohlenstoffnanoröhrchenverbundmaterial nach Anspruch 7 oder 8, wobei die Kohlenstoffnanoröhrchenfilmstruktur einen Kohlenstoffnanoröhrchenfilm umfasst, welcher mehrere Zwischenräume zwischen zwei benachbarten Kohlenstoffnanoröhrchen umfasst.

10. Verfahren zur Herstellung eines Kohlenstoffnanoröhrchenverbundmaterials, wobei das Verfahren die Schritte umfasst:
(a) Bereitstellen eines Kohlenstoffnanoröhrchenfilms mit mehreren Kohlenstoffnanoröhrchen, welche durchgehend und parallel zueinander verbunden sind, wobei der Kohlenstoffnanoröhrchenfilm durch die folgenden Teilschritte gebildet wird:
Bereitstellen einer Kohlenstoffnanoröhrchenanordnung;
Auswählen von mehreren Kohlenstoffnanoröhrchensegmenten mit einer vorbestimmten Breite aus der Kohlenstoffnanoröhrchenanordnung
Ziehen der Kohlenstoffnanoröhrchensegmente bei einer gleichförmigen/einheitlichen Geschwindigkeit, um einen einheitlichen Kohlenstoffnanoröhrchenfilm zu erzielen, und
(b) Ausbilden von mindestens einer leitenden Beschichtung auf mehreren der Kohlenstoffnanoröhrchen in dem Kohlenstoffnanoröhrchenfilm durch ein Vakuumverdampfungsabscheidungsverfahren, wobei das Vakuumverdampfungsabscheidungsverfahren die folgenden Teilschritte umfasst:
Bereitstellen von zwei Verdampfungsquellen, welche an gegenüberliegenden Seiten des Kohlenstoffnanoröhrchenfilms angeordnet sind; Heizen der zwei Verdampfungsquellen, um eine leitende Beschichtung auf zwei gegenüberliegenden Flächen des Kohlenstoffnanoröhrchenfilms abzusetzen,
wobei die leitende Beschichtung eine leitende Schicht umfasst.

11. Verfahren nach Anspruch 10, wobei der Kohlenstoffnanoröhrchenfilm mit einem Laser behandelt wird, um die Dicke des Kohlenstoffnanoröhrchenfilms vor dem Schritt (b) zu verringern.

12. Verfahren nach Anspruch 10 oder 11, ferner umfassend einen Schritt eines Verdrehens des Kohlenstoffnanoröhrchenfilms nach Schritt (b).

13. Verfahren nach einem der Ansprüche 10-12, wobei der Kohlenstoffnanoröhrchenfilm entlang einer ausgerichteten Richtung der Kohlenstoffnanoröhrchen darin verdreht wird.

## Revendications

1. Matériau composite de nanotubes de carbone comprenant :
une pluralité de nanotubes de carbone qui sont reliés de bout en bout parallèlement les uns aux autres par des forces d'attraction de Van der Waals ; et
au moins une couche de revêtement conducteur disposée près des nanotubes de carbone.

2. Matériau composite de nanotubes de carbone selon la revendication 1, dans lequel la couche de revêtement conducteur est en contact avec les surfaces des nanotubes de carbone.

3. Matériau composite de nanotubes de carbone selon la revendication 1 ou 2, dans lequel la couche de revêtement conducteur comprend une couche conductrice et le matériau de la couche conductrice est constitué d'un matériau choisi dans le groupe comprenant le cuivre, l'argent, l'or et des alliages de ceux-ci.

4. Matériau composite de nanotubes de carbone selon la revendication 3, dans lequel une épaisseur de la couche conductrice va de 1 nm à 20 nm.

5. Matériau composite de nanotubes de carbone selon l'une quelconque des revendications 1 à 4, dans lequel la couche de revêtement conducteur comprend en outre une couche mouillante située entre la surface externe de chaque nanotube de carbone et la couche conductrice.

6. Matériau composite de nanotubes de carbone selon la revendication 5, dans lequel le matériau de la couche mouillante est choisi dans le groupe comprenant le fer, le cobalt, le nickel, le palladium, le titane et des alliages de ceux-ci, et une épaisseur de la couche mouillante va de 1 nm à 20 nm.

7. Matériau composite de nanotubes de carbone comprenant :
une structure en feuille de nanotubes de carbone comprenant une pluralité de nanotubes de carbone qui sont reliés de bout en bout parallèlement les uns aux autres par des forces d'attraction de Van der Waals et parallèles à une surface de la feuille de nanotubes de carbone ; et
au moins une couche de revêtement conducteur disposée près des nanotubes de carbone.

8. Matériau composite de nanotubes de carbone selon la revendication 7, dans lequel la structure en feuille de nanotubes de carbone est une structure autonome.

9. Matériau composite de nanotubes de carbone selon la revendication 7 ou 8, dans lequel la structure en feuille de nanotubes de carbone comprend une feuille de nanotubes de carbone comprenant une pluralité d'intervalles entre deux nanotubes de carbone adjacents.

10. Procédé de production d'un matériau composite de nanotubes de carbone, le procédé comprenant les étapes consistant à :
(a) fournir une feuille de nanotubes de carbone ayant une pluralité de nanotubes de carbone qui sont reliés de bout en bout et parallèles les uns aux autres, la feuille de nanotubes de carbone étant formée par les sous-étapes suivantes :
fournir un réseau de nanotubes de carbone ;
sélectionner une pluralité de segments de nanotube de carbone ayant une largeur prédéterminée parmi le réseau de nanotubes de carbone
étirer les segments de nanotube de carbone à une vitesse égale/uniforme pour obtenir une feuille de nanotubes de carbone uniforme, et
(b) former au moins une couche de revêtement conducteur sur une pluralité des nanotubes de carbone dans la feuille de nanotubes de carbone par un procédé de dépôt par évaporation sous vide, le procédé de dépôt par évaporation sous vide comprenant les sous-étapes suivantes :
fournir deux sources d'évaporation disposées séparément du côté opposé de la feuille de nanotubes de carbone ; chauffer les deux sources d'évaporation pour déposer une couche de revêtement conducteur sur deux surfaces opposées de la feuille de nanotubes de carbone,
dans lequel la couche de revêtement conducteur comprend une couche conductrice.

11. Procédé selon la revendication 10, dans lequel la feuille de nanotubes de carbone est traitée par un laser pour réduire l'épaisseur de la feuille de nanotubes de carbone avant l'étape (b).

12. Procédé selon la revendication 10 ou 11, comprenant en outre une étape consistant à enrouler la feuille de nanotubes de carbone après l'étape (b).

13. Procédé selon l'une quelconque des revendications 10 à 12, dans lequel la feuille de nanotubes de carbone est enroulée le long du sens d'alignement des nanotubes de carbone à l'intérieur.
